# EUROPEAN PATENT SPECIFICATION

(11) **EP 2 973 595 B1**
(45) Date of publication and mention of the grant of the patent: **02.01.2019**
(21) Application number: 14810719.6
(22) Date of filing: 17.03.2014
(51) Int. Cl.: G21C 9/00, G21C 15/18

(54) **PASSIVE TECHNIQUES FOR LONG-TERM REACTOR COOLING**
PASSIVE VERFAHREN ZUR LANGFRISTIGEN REAKTORKÜHLUNG
TECHNIQUES PASSIVES POUR REFROIDISSEMENT DE RÉACTEUR À LONG TERME

(30) Priority: 15.03.2013 US 201361794206 P
(43) Date of publication of application: 20.01.2016
(73) Proprietor: BWXT mPower, Inc., Charlotte, NC 28277 (US)
(72) Inventor: MALLOY, John, D., III, Goode, VA 24556 (US); BINGHAM, Billy, E., Lynchburg, VA 24502-4669 (US); WATSON, Ronald, C., Forest, VA 24551 (US); WILLIAM, Jason, G., Concord, VA 24538 (US); ALES, Matthew, W., Forest, VA 24551 (US); INMAN, James, B., Forest, VA 24551 (US); BOYLE, Sean, M., Charlotte, NC 28203 (US)
(74) Representative: Gray, James
(86) International application number: PCT/US2014/030393
(87) International publication number: WO 2014/200600

(56) References cited:
- WO-A2-2013/095741
- US-A- 4 421 716
- US-A- 4 587 079
- US-A- 4 692 297
- US-A- 4 972 596
- US-A1- 2004 196 948
- US-A1- 2012 243 651
- US-A1- 2012 243 651
- US-A1- 2012 321 030

## Description

This application claims the benefit of U.S. Provisional Application No. 61/794,206 filed March 15, 2013 and titled "PASSIVE TECHNIQUES FOR LONG-TERM REACTOR COOLING".

### BACKGROUND

The following relates to the nuclear power generation arts, nuclear reactor safety arts, nuclear reactor emergency core cooling (ECC) arts, and related arts.

In a loss of coolant accident (LOCA), the nuclear reactor core is to be kept immersed in water so as to provide for removal of decay heat and to prevent exposure of the fuel rods to air which can lead to chemical reactions and release of airborne radioactivity. The system which provides this water injection is referred to as the emergency core cooling (ECC) system. In a typical arrangement, a refueling water storage tank (RWST) is located with the nuclear reactor inside radiological containment to provide water for use during reactor refueling, and this RWST also serves as a water source for the ECC system. The RWST is located above the reactor core so that the passive ECC system can operate by gravity-driven water flow.

Water injected into the depressurized pressure vessel by the ECC system is converted to steam by decay heat from the nuclear reactor core. Preferably, this steam is recaptured by condensing it into the RWST so as to form a closed-loop recirculating heat exchange system. In practice, some steam is lost from the break that caused the LOCA. This lost steam condenses inside the surrounding radiological containment, thereby contributing to heat transfer from the reactor core although not in a recirculating fashion. In some embodiments, the water collects in a containment sump, and a sump pump is provided to recirculate the water back into the RWST.

However, this approach is susceptible to failure if the diesel generators or other power source driving the sump pump fail, and moreover there is the potential to transfer contamination into the RWST that can interfere with operation of the ECC system.

According to one aspect of the invention, there is provided an apparatus comprising:
a pressurized water reactor (PWR) comprising a pressure vessel containing a nuclear reactor core comprising fissile material;
a radiological containment structure inside of which the PWR is disposed;
an emergency core cooling system configured to respond to a vessel penetration break at the top of the pressure vessel that results in depressurization of the pressure vessel by draining water from a body of water through an injection line into the pressure vessel; and
a barrier configured to operate concurrently with the emergency core cooling system to suppress flow of liquid water from the pressure vessel out the vessel penetration break at the top of the pressure vessel, wherein the PWR further comprises a central riser disposed inside the pressure vessel and defining a coolant circulation path in which coolant water heated by the nuclear reactor core flows upward inside the central riser, exits a top opening of the central riser, and flows downward in a downcomer annulus defined between the central riser and the pressure vessel to return to the nuclear reactor core, and the barrier comprises:
   an extension of the injection line disposed inside the pressure vessel and passing through the central riser to drain water from the body of water into the central riser of the pressure vessel.

According to another aspect of the invention, there is provided an apparatus comprising:
a pressurized water reactor (PWR) comprising a pressure vessel containing a nuclear reactor core comprising fissile material;
a radiological containment structure inside of which the PWR is disposed;
an emergency core cooling system configured to respond to a vessel penetration break at the top of the pressure vessel that results in depressurization of the pressure vessel by draining water from a body of water through an injection line into the pressure vessel; and
a barrier configured to operate concurrently with the emergency core cooling system to suppress flow of liquid water from the pressure vessel out the vessel penetration break at the top of the pressure vessel, wherein the PWR further comprises a central riser disposed inside the pressure vessel and defining a coolant circulation path in which coolant water heated by the nuclear reactor core flows upward inside the central riser, exits a top opening of the central riser, and flows downward in a downcomer annulus defined between the central riser and the pressure vessel to return to the nuclear reactor core, and the barrier comprises:
   openings in a lower portion of the central riser arranged to shunt a portion of the upward flow in the central riser into a lower portion of the downcomer annulus.

According to another aspect of the invention, there is provided a method comprising:
operating a pressurized water reactor (PWR) comprising a pressure vessel containing a nuclear reactor core comprising fissile material; and
responding to a vessel penetration break at the top of the pressure vessel that results in depressurization of the pressure vessel by operations including:
   draining water from a body of water through an injection line into the pressure vessel, and
   during the draining, suppressing flow of liquid water from the pressure vessel out the vessel penetration break, wherein the operation of suppressing flow of liquid water from the pressure vessel out the vessel penetration break comprises:
      during the draining, generating a counterflow in the pressure vessel in a direction opposite a flow of coolant water in the pressure vessel during the operating.

According to another aspect of the invention, there is provided a method comprising:
operating a pressurized water reactor (PWR) comprising a pressure vessel containing a nuclear reactor core comprising fissile material; and
responding to a vessel penetration break at the top of the pressure vessel that results in depressurization of the pressure vessel by operations including:
   draining water from a body of water through an injection line (66) into the pressure vessel, and
   during the draining, suppressing flow of liquid water from the pressure vessel out the vessel penetration break, wherein the PWR further comprises a central riser disposed inside the pressure vessel, the operating comprises circulating coolant water upward inside the central riser and downward in a downcomer annulus defined between the central riser and the pressure vessel, and the operation of suppressing flow of liquid water from the pressure vessel out the vessel penetration break comprises:
      shunting a portion of the upward flow of coolant water in the central riser through holes in the central riser and into a lower portion of the downcomer annulus without the shunted water reaching a top of the central riser.

### BRIEF SUMMARY

In one disclosed aspect, an apparatus comprises: a pressurized water reactor (PWR) comprising a pressure vessel containing a nuclear reactor core comprising fissile material; a radiological containment structure inside of which the PWR is disposed; an emergency core cooling system configured to respond to a vessel penetration break at the top of the pressure vessel that results in depressurization of the pressure vessel by draining water from a body of water through an injection line into the pressure vessel; and a barrier configured to operate concurrently with the emergency core cooling system to suppress flow of liquid water from the pressure vessel out the vessel penetration break at the top of the pressure vessel. The barrier may comprise one or more of: (1) an extension of the injection line disposed inside the pressure vessel and passing through the central riser to drain water from the body of water into the central riser of the pressure vessel; (2) openings in a lower portion of a central riser arranged to shunt a portion of the upward flow in the central riser into a lower portion of the downcomer annulus; and (3) a surge line configured to provide fluid communication between a pressurizer volume at the top of the pressure vessel and the remainder of the pressure vessel, the surge line configured to direct water outboard toward a downcomer annulus.

In another disclosed aspect, a method comprises operating a pressurized water reactor (PWR) comprising a pressure vessel containing a nuclear reactor core comprising fissile material, and responding to a vessel penetration break at the top of the pressure vessel that results in depressurization of the pressure vessel by operations including: draining water from a body of water through an injection line into the pressure vessel; and during the draining, suppressing flow of liquid water from the pressure vessel out the vessel penetration break. The suppressing may include generating a counterflow in the pressure vessel during the draining in a direction opposite a flow of coolant water in the pressure vessel during the operating, for example by injecting the water from the body of water into the central riser. The suppressing additionally or alternatively may comprise shunting a portion of the upward flow of coolant water in the central riser through holes in the central riser and into a lower portion of the downcomer annulus without the shunted water reaching a top of the central riser. The suppressing additionally or alternatively may comprise directing surge flow between a pressurizer volume and the remainder volume of the pressure vessel outboard toward a downcomer annulus.

### BRIEF DESCRIPTION OF THE DRAWINGS

The invention may take form in various components and arrangements of components, and in various process operations and arrangements of process operations. The drawings are only for purposes of illustrating preferred embodiments and are not to be construed as limiting the invention. This disclosure includes the following drawings.
FIGURE 1 shows a diagrammatic cutaway perspective view of an illustrative small modular reactor (SMR) disposed in a radiological containment structure along with a refueling water storage tank (RWST) with an emergency core cooling (ECC) system utilizing the RWST, and further including a diagrammatically indicated mechanism for suppressing loss of liquid water through a LOCA break.
FIGURES 2-4 diagrammatically show illustrative embodiments of the mechanism for suppressing loss of liquid water through the LOCA break.

### DETAILED DESCRIPTION OF THE PREFERRED EMBODIMENTS

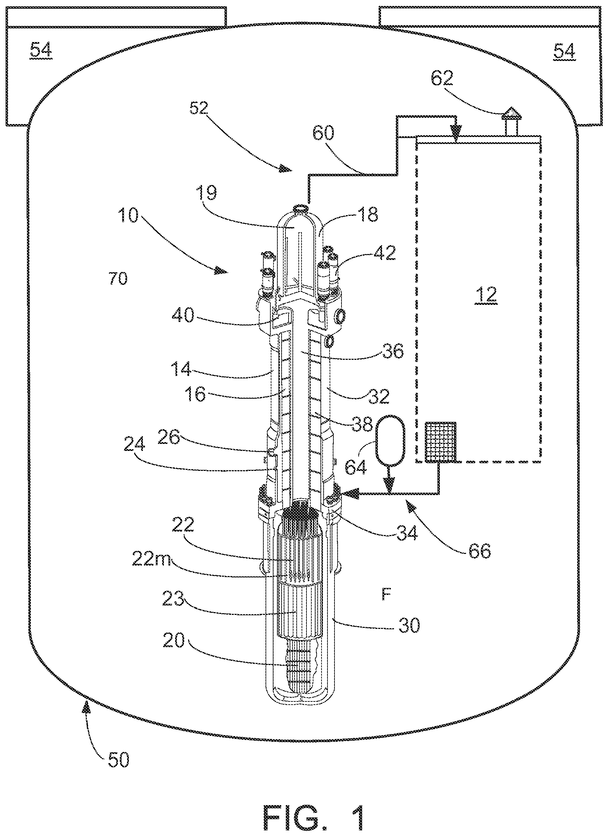

With reference to FIGURE 1, a cutaway perspective view is shown of an illustrative small modular reactor (SMR) **10** and an illustrative refueling water storage tank (RWST) **12** (typically, two or more RWSTs are provided for redundancy). The SMR unit **10** is of the pressurized water reactor (PWR) variety, and includes a pressure vessel **14** and one or more integral steam generators **16** disposed inside the pressure vessel **14** (that is, the illustrative SMR **10** is an integral PWR **10**). Alternatively, an external steam generator may be employed. The SMR **10** also includes an integral pressurizer **18** defining an integral pressurizer volume **19** at the top of the pressure vessel **14;** alternatively, an external pressurizer may be employed that is connected at the top of the SMR **10** by suitable piping. The pressure vessel **14** contains a nuclear reactor core **20** comprising fissile material such as ²³⁵U (typically in an alloy, composite, mixture, or other form) immersed in (primary) coolant water (more generally herein, simply "coolant" or "coolant water"). With the reactor core **20** immersed in coolant water, and when control rod drive mechanisms (CRDMs) **22** at least partially withdraw control rods made of neutron-absorbing material, a nuclear chain reaction is initiated in the nuclear reactor core **20** which heats the (primary) coolant water. The illustrative CRDMs **22** are internal CRDMs, in which the CRDM unit including its motor **22m** including both rotor and stator are disposed inside the pressure vessel **14,** and guide frame supports **23** guide the portions of the control rods located above the core; in other embodiments, external CRDM units may be employed. In the illustrative integral PWR **10,** a separate water flow (secondary coolant) enters and exits the steam generators **16** via feedwater inlet **24** and steam outlets **26,** respectively. The secondary coolant flows through secondary coolant channels of the steam generator or generators **16,** and is converted to steam by heat from the reactor core carried by the (primary) coolant water. Alternatively, if an external steam generator is employed then large-diameter closed-loop piping feeds (primary) coolant water from the pressure vessel to the external steam generator where heat from the primary coolant converts secondary coolant flow in the external steam generator to steam. The pressure vessel **14** of the illustrative integral PWR **10** includes a lower portion **30** housing the nuclear reactor core **20** and an upper portion **32** housing the steam generators **16,** with a mid-flange **34** connecting the upper and lower portions of the pressure vessel; however, the pressure vessel may be otherwise constructed or otherwise configured.

A primary coolant flow circuit **F** inside the pressure vessel **14** is defined by a cylindrical central riser **36** extending upward above the reactor core **20** and a downcomer annulus **38** defined between the central cylindrical riser **36** and the pressure vessel **14.** The flow **F** may be driven by natural circulation (i.e. by primary coolant heated by the reactor core **20** rising through the central cylindrical riser **36,** discharging at the top and flowing downward through the downcomer annulus **38**), or may be assisted or driven by reactor coolant pumps (RCPs), such as illustrative RCPs including RCP casings **40** containing impellers driven by RCP motors **42.** The RCPs may alternatively be located elsewhere along the primary coolant path, or omitted entirely in a natural circulation reactor. It is again noted that the illustrative SMR **10** is merely an illustrative example, and the disclosed ECC techniques are suitably employed with substantially any type of light water nuclear reactor.

With continuing reference to FIGURE 1, a diagrammatic sectional view is shown of the SMR **10** disposed in a radiological containment structure **50** (also referred to herein as "radiological containment" or simply "containment") along with the refueling water storage tank (RWST) **12.** While a single RWST **12** is illustrated, it is to be understood that two or more RWSTs may be disposed inside containment to provide redundancy and/or to provide a larger total volume of water. The RWST **12** serves multiple purposes. As the name implies, is provides water for use during routine refueling (that is, removal of spent fuel comprising the nuclear reactor core and its replacement with fresh fuel). The RWST **12** also serves as a water reserve for use during certain accident scenarios, such as a loss of heat sinking event in which the heat sinking via the steam generators **16** or other heat sinking pathway is interrupted causing the pressure and temperature in the reactor pressure vessel **14** to rise; or a loss of coolant accident (LOCA) in which a break occurs in a (relatively large-diameter) pipe or vessel penetration connected with the pressure vessel **14.**

FIGURE 1 diagrammatically illustrates the response to a LOCA comprising a break from which steam **52** (possibly in the form of a two-phase steam/water mixture **52**) escapes. In FIGURE 1 such a LOCA is diagrammatically indicated as originating in the proximity of the integral pressurizer **18** at the top of the pressure vessel **14.** In some embodiments the SMR **10** is designed to eliminate the possibility of a LOCA break occurring at an elevation equal to or lower than the top of the reactor core **20.** This can be done by designing the pressure vessel **14** with all large-diameter vessel penetrations located above the top of the reactor core **20** (e.g., the steam generator couplings **24, 26** are so located in the embodiment of FIGURE 1). As used herein, "large diameter" vessel penetrations are defined as vessel penetrations of diameter 1.8-inch or larger. Additionally or alternatively, passive integral isolation valves may be employed for large-diameter vessel penetrations, so that any pipe breakage at the vessel penetration is immediately and passively sealed by the integral isolation valve. For example, in the case of a make-up line or other water input line, the passive integral isolation valve may be constructed as a check valve built into the mounting flange (rather than in or connected by external piping that is susceptible to breakage) that operates passively to prevent outflow of coolant from the flange having the integral valve. In the case of a letdown line, the passive integral isolation valve can be constructed with a spring bias that maintains the valve in the open position against the pressure of fluid flowing out via the letdown line, with the spring bias chosen such that an increase in (differential) outward pressure above a threshold value overcomes the spring bias to passively close the valve. Again, the integral isolation valve is preferably built into the mounting flange.

With such measures, it can be ensured that any LOCA break occurs at an elevation well above the top of the reactor core **20.** In the illustrative pressure vessel **14,** the only large-diameter vessel penetrations susceptible to a break constituting a LOCA are located at the integral pressurizer **18** at the top of the pressure vessel **14.** In such a LOCA, the steam/water **52** that escapes from the integral pressurizer **18** of the pressure vessel **14** is contained by the radiological containment **50,** and the released energy is ejected to an ultimate heat sink (UHS) **54** via a suitable transfer mechanism. In illustrative FIGURE 1, this heat transfer is achieved (at least in part) by direct thermal contact between the UHS **54** which comprises a large body of water located on top of and in thermal contact with the top of the containment **50.** Additionally, a passive emergency core cooling (ECC) is activated, which depressurizes the reactor **10** using valves connected to the pressurizer **18** (in the illustrative example of FIGURE 1, or elsewhere in other reactor designs) to vent the pressure vessel **14** to the RWST **12.** This operation is diagrammatically indicated by steam path **60** carrying steam (or two-phase steam/water mixture) from the pressurizer **18** to be re-condensed in the RWST **12.** Any excess pressure in the RWST **12** resulting from the venting of the pressure vessel to the RWST escapes via a steam vent **62** from the RWST. While depressurizing the reactor, water is initially injected into the reactor vessel from two (for redundancy, or more than two for further redundancy) nitrogen pressurized intermediate pressure injection tanks (IPIT, of which one illustrative IPIT **64** is shown in FIGURE 1) to assure the reactor core **20** remains immersed in coolant water during the depressurization. The water in the IPIT **64** optionally includes boron or another neutron poison to facilitate rapid shutdown of the nuclear chain reaction. Once the reactor **10** is depressurized, water in the RWST **12** (or RWSTs, if two or more redundant RWST units are provided inside containment) drains into the reactor vessel **14** via an injection line **66** running from the RWST **12** to the reactor pressure vessel, thus refilling the vessel **14.** (Note that in illustrative FIGURE 1, a downstream portion of the injection line **66** also provides the input path for water from the IPIT **64,** in which case suitable valving is provided to valve off the IPIT **64** after initial depressurization is complete. The valving is optionally passive, e.g. automatically closing when the pressure in the pressure vessel **14** falls below a setpoint. It is also contemplated to connect the IPIT with the reactor pressure vessel via a separate line from the injection line **66.)** The water in the RWST(s) **12** provides long-term cooling for the reactor core **20.**

The RWST **12** is a large body of water conveniently located inside the radiological containment structure **50** and hence is an attractive body of water for use by the ECC system; however, it is alternatively contemplated to connect the injection line **66** to another suitably large body of water that is located at an elevated position respective to the reactor core **20** so as to be drained into the pressure vessel **14** so as to provide emergency core cooling (ECC).

During the depressurization, it is expected that substantial primary coolant in the form of steam will exit the pressure vessel **14** via the break that caused the LOCA. After startup of the ECC system, it is expected that steam will continue to exit the pressure vessel **14** via the break, albeit at a lower mass flow rate than during the initial depressurization. In some embodiments the volume capacity of the RWST(s) **12** is designed to be sufficient to remove decay heat for a design time interval, e.g. 72 hours in some embodiments, or 14 days in other embodiments, without the need to recirculate water from a containment sump using sump pumps. This avoids the potential for transferring contaminants from the sump into the RWST.

Because the ECC system relies upon gravity feed of water from the RWST **12** into the pressure vessel **14,** it is necessary for the water level in the RWST **12** to be higher than the water level in the pressure vessel **14** in order for the ECC to operate. In some embodiments, the initial water level in the RWST **12** is higher than the top of the pressure vessel **14** - in such embodiments, it is expected that the water level in the reactor vessel **14** will rise to the top of the pressurizer **18** and liquid water will flow out through the LOCA break. However, once the water level in the RWST **12** drops below the top of the pressurizer **18,** it might be expected that the flow out of the break would transition from mostly water to essentially all steam. This transition allows efficient utilization of the RWST water inventory. Since the heat capacity of the water then includes the latent heat for converting the water to steam.

However, RELAP (Reactor Excursion and Leak Analysis Program) analysis of long-term cooling indicates that this is not necessarily the case; rather, a two-phase steam/water mixture with substantial water content continues to leave the LOCA break even after the water level in the RWST **12** has drained below the level of the LOCA break. Without being limited to any particular theory of operation, it is believed that this effect is caused as follows. Decay heat from the reactor core **20** generates steam that reduces the density of the water above the reactor core **20.** This effect prevents an equilibrium from being established between the water/steam column in the reactor vessel **14** and the water column in the RWST **12.** The higher RWST driving head therefore continues to force water out of the break.

The magnitude of the problem is illustrated by a simple calculation, performed for a nuclear island design substantially similar to that shown in FIGURE 1, in which the RWST (or plurality of RWSTs) has a capacity of about 1,324,894 litres (about 350,000 gallons), the initial water level in the RWST is at an elevation of 28.9m (95 feet), and the LOCA break is at a point (10 feet) lower in elevation, i.e. at 25.9m (85 feet). At 48.9 °C (120°F), the water in the RWST has a density of 988.34Kg/m³ (61.7 lb/ft³) (pounds/cubic foot)). At 103.4kPa (15 psia), saturated water has a density of 957.90Kg/m³ (59.8 lb/ft³) and steam has a density of 0.61Kg/m³ (0.038 lb/ft³). If the ECC inlet to the vessel (that is, the inlet of the injection line **66** to the pressure vessel **14** in illustrative FIGURE 1) has an elevation of (1 feet and an average quality of 1% (that is, the water flowing in from the RWST is almost purely water with little or no steam content), then the density inside the reactor would be 57.35Kg/m³ (3.58 lb/ft³). In this case, the water level in the RWST would need to drop to an elevation of about 10.36m (about 34 ft) (which is 2.13m (7 feet) below the bottom of the RWST in some contemplated embodiments) in order to reach an equilibrium static head.

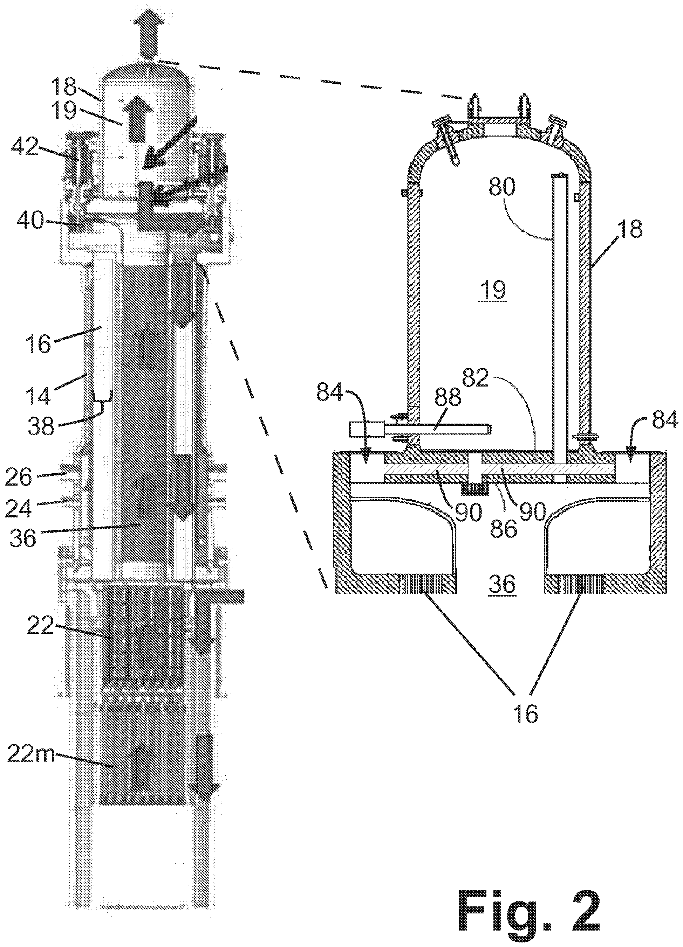

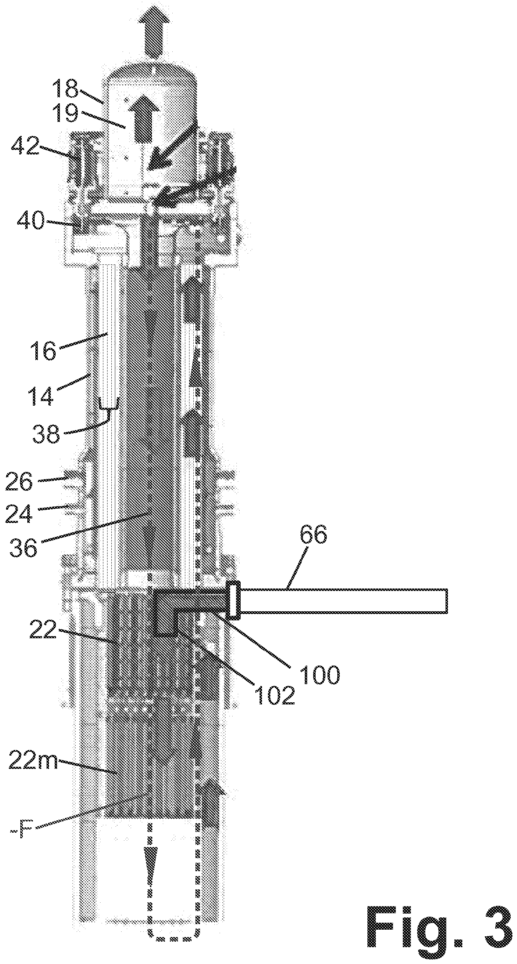

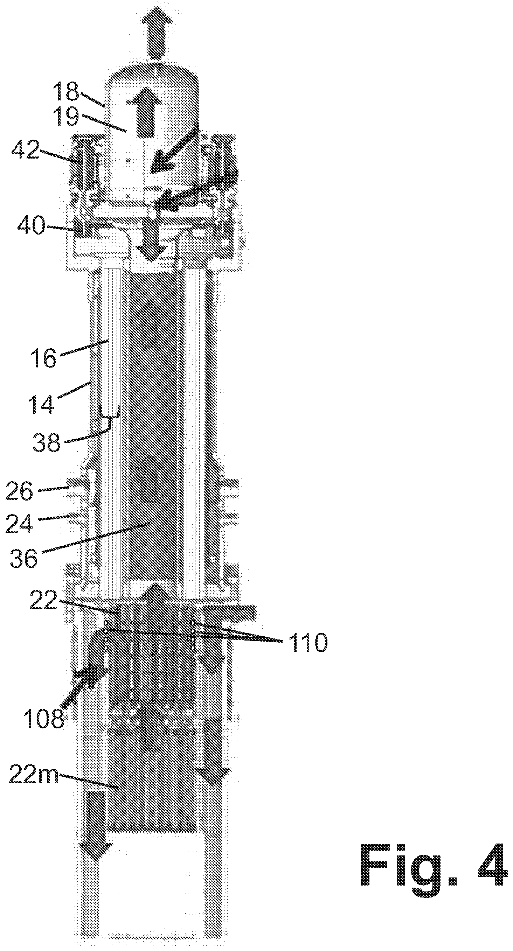

With returning reference to FIGURE 1, to compensate for this effect it is disclosed herein that the total quality in the central riser **36** (or other upward flow path of the circulating primary coolant) is reduced, or additional pressure drop is incorporated into the ECC injection system. Toward this end, a barrier mechanism **70,** diagrammatically indicated in FIGURE 1, is implemented to suppress the flow of liquid water in the central riser **36** (or other upward flow path of the circulating primary coolant) from passing upward to the LOCA break. The barrier **70** may take the various forms, as described in the following. In some embodiments (described herein with reference to FIGURE 2), the barrier **70** comprises a modification of the pathways connecting the volume contained by the central riser **36** with the internal pressurizer volume **19.** This approach forms the barrier **70** as a direct physical barrier, i.e. a baffle or tortuous path that limits the flow of liquid water from the central riser **36** into the internal pressurizer **18.** In some embodiments (described herein with reference to FIGURE 3), the barrier **70** comprises modifying the ECC system so that it injects water from the RWST **12** into the central riser **36** in a manner that tends to drive circulation in a direction opposing the primary coolant flow circuit **F** inside the pressure vessel **14.** This forms the barrier **70** indirectly, by slowing or even reversing the velocity of the primary coolant flow circuit **F** so as to limit the flow of liquid water from the central riser **36** into the internal pressurizer **18.** In some embodiments (described herein with reference to FIGURE 4), the barrier **70** comprises providing bypass valves that divert a portion of the upward flow leg of the primary coolant flow circuit **F** from the central riser **36** into the downcomer annulus **38.** This again forms the barrier **70** indirectly, by reducing the volume of upward flow in the central riser **36** so as to limit the flow of liquid water from the central riser **36** into the internal pressurizer **18.** It will be appreciated that these mechanisms are not mutually exclusive, and the barrier **70** may comprise a combination of two or more of these mechanisms or variants thereof.

In general, the amount of steam generated in the reactor vessel **14** after a LOCA is determined by the core decay heat. This cannot be altered by the designer without changing the power level of the plant. However, the quality in the riser **36** can be improved by increasing the flow of water within the riser, by constructing the pressure vessel **14** to be configured to entrain water with the steam. Toward this end, a flow path is provided with the barrier **70** so as to separate the steam and water at the top of the reactor vessel **14** allowing the water to flow to the bottom of the pressure vessel **14** where it can be entrained with steam in the core again.

The high quality natural circulation path should interface with the pressurizer **18** in a way that allows the excess water to be separated and directed back to the bottom of the pressure vessel **14.** However, this is difficult to achieve in the context of an integral pressurizer, because flow paths are designed to permit relatively free fluid communication between the volume contained in the central riser **36** and the volume **19** of the integral pressurizer **18.**

With reference to FIGURE 2, and in particular the inset of FIGURE 2, when the RWST **12** has sufficient driving head to fill the reactor vessel **14,** two-phase flow rises and enters the pressurizer **18** through stand pipes **80** that extend through a pump support plate **82.** (More generally, the stand pipes **80** pass through a plate separating the pressurizer space **19** from the remainder of the pressure vessel volume. Note that in the inset of FIGURE 2 the illustrative RCPs **40, 42** are removed for clarity leaving mounting openings **84** in their place in the pump support plate **82.** More generally, the RCPs may be located elsewhere, or may be omitted entirely in a natural circulation reactor.) The surge pipes **80** provide steam venting into the pressurizer space **19** during reactor depressurization. During normal operation, surge lines **86** are provided via which water passes, in a constricted manner e.g. by baffles or the like, to allow pressure in the pressurizer **18** and remainder of the pressure vessel **14** to reach an equilibrium. During normal operation, pressure control elements **88,** e.g. resistive heaters, spargers, or the like, are operable to raise or lower the pressure in the pressurizer volume **19,** with the surge lines **86** allowing these changes to transfer to the lower operational portion of the pressure vessel **14.**

During depressurization, however, the surge lines **86** allow water collected in the pressurizer to drain out through the surge lines **86.** This flow is directed into the rising two-phase steam/water flow rising up in the central riser **36.** This prohibits a natural flow of the water, increasing the average quality within the riser.

In the embodiment of the barrier **70** of FIGURE 2, the pressurizer surge line **86** is modified to discharge along paths **90** that direct the water through the reactor coolant pumps and then down the tubes of the steam generators **16.** (More generally, the modified surge lines **90** direct water outboard toward the downcomer annulus, and are also suitably employed in embodiments that do not employ RCPs or that locate RCPs elsewhere along the primary coolant flow circuit.) These modified paths **90** can be used during normal reactor operation as the surge lines, or can be opened by passive valves in response to an overpressure condition. In another alternative embodiment, the paths **90** are omitted and instead passive overpressure shutoff valves are installed on the surge lines **86** to close these lines off during ECC operation so that only the stand pipes **80** provide steam transport pathways into the pressurizer volume **90.**

With reference to FIGURE 3, in another embodiment of the barrier **70,** the inlet of the injection line **66** to the pressure vessel **14,** which conventionally feeds into the downcomer annulus **38,** is modified by adding an extension pipe **100** so as to feed into the central riser **36.** Optionally, the extension pipe **100** has a downwardly oriented outlet spigot **102** so as to direct the injected coolant from the RWST **12** downward. As diagrammatically indicated in FIGURE 3, this tends to produce a coolant circulation flow **-F** oriented opposite to the direction from the primary coolant flow circuit **F** inside the pressure vessel **14** that is driven by the decay heat from the reactor core **20.** In some embodiments, the magnitude of the counterflow **-F** is sufficient to actually reverse the direction of circulation in the pressure vessel **14,** while in other embodiments the magnitude of the counterflow **-F** is less than that of the flow **F,** but is sufficient to slow the velocity of the flow **F.** The counterflow **-F** aligns with the discharge of water through the pressurizer, and thereby has the effect of reducing the flow of water into the pressurizer volume **19** driven by the upward current of the flow **F** in the central riser **36.** The counterflow **-F** can be interrupted when ECC flow is sufficiently low, or if some heat removal is available through a remedial operational mode of the steam generator (in embodiments that include the internal steam generator **16**).

With reference to FIGURE 4, in another embodiment of the barrier **70,** a circulation pattern **108** is created using openings **110** in the core barrel (or other lower portion of the vessel central riser **36**) so that a portion of the upward flow in the central riser **36** is shunted into the lower portion of the downcomer annulus **38** without passing upward into proximity with the pressurizer **18.** The openings **110** can be holes, holes with flow diodes (i.e. check valves) or passively opened bypass valves to minimize normal bypass flow. This allows natural circulation flow **108** in the lower vessel. The flow **108** can be either in the normal direction (as illustrated) or in the reverse direction.

It is to be appreciated that the disclosed mechanisms for implementing the barrier **70** described with reference to FIGURES 2-4 are merely illustrative, and may be combined in various ways. As another illustrative example, if the RCPs are located in a lower portion of the pressure vessel such that they are submerged during the ECC operation, and if electrical drive power is available, then it is contemplated to implement the barrier **70** at least in part by operating the RCPs in retrograde so as to provide the counterflow **-F** (see FIGURE 3) in an active fashion. (Although such operation may be relatively inefficient since the impeller blades are not designed for retrograde operation, the RCPs are nonetheless expected to be capable of generating counterflow **-F** sufficient to usefully reduce flow of water out the LOCA break.) The disclosed barrier **70** is effective for a pressurized water reactor (PWR) in the case of a LOCA break occurring at the top of the pressure vessel, e.g. in a vessel penetration into an integral pressurizer (as illustrated in FIGURES 1-4) or at piping between the top of the pressure vessel and an external pressurizer or at piping connecting at the top of such an externally pressurized vessel (variants not illustrated). As used herein, phraseology such as "top of the pressure vessel" is intended to encompass any break in a vessel penetration into the integral pressurizer **18** that is large enough to constitute a LOCA (that is, any break in a pipe of diameter greater than 1.8-inch). In the case of an externally pressurized vessel (that is, a pressure vessel that is pressurized using an external pressurizer connected via piping), "top of the pressure vessel" is intended to encompass any break large enough to constitute a LOCA in a vessel penetration at an elevation high enough to be located above the primary coolant circuit in the pressure vessel. Still further, while integral PWR systems in which steam generators **16** are disposed inside the pressure vessel **14** are illustrated, it is contemplated to employ the disclosed embodiments of the barrier **70** in PWR systems that utilize external steam generators.

The preferred embodiments have been illustrated and described. Obviously, modifications and alterations will occur to others upon reading and understanding the preceding detailed description. It is intended that the invention be construed as including all such modifications and alterations insofar as they come within the scope of the appended claims.

## Claims

1. An apparatus comprising:
a pressurized water reactor (PWR) (10) comprising a pressure vessel (14) containing a nuclear reactor core (20) comprising fissile material;
a radiological containment structure (50) inside of which the PWR (10) is disposed;
an emergency core cooling system configured to respond to a vessel penetration break (14) at the top of the pressure vessel (14) that results in depressurization of the pressure vessel (14) by draining water from a body of water through an injection line (66) into the pressure vessel (14); and
a barrier (70) configured to operate concurrently with the emergency core cooling system to suppress flow of liquid water from the pressure vessel (14) out the vessel penetration break at the top of the pressure vessel (14), wherein the PWR (10) further comprises a central riser (36) disposed inside the pressure vessel (14) and defining a coolant circulation path in which coolant water heated by the nuclear reactor core (20) flows upward inside the central riser (36), exits a top opening of the central riser, and flows downward in a downcomer annulus (38) defined between the central riser (36) and the pressure vessel (14) to return to the nuclear reactor core (20), and the barrier (70) comprises:
an extension (100) of the injection line (66) disposed inside the pressure vessel (14) and passing through the central riser (36) to drain water from the body of water into the central riser (36) of the pressure vessel (14).

2. The apparatus of claim 1 wherein the extension (100) of the injection line (66) includes a downwardly oriented outlet spigot (102) disposed inside the central riser (36).

3. The apparatus of claim 1 wherein the body of water comprises a refueling water storage tank (RWST) (12) disposed with the PWR (10) in the radiological containment.

4. The apparatus of claim 5 wherein the emergency core cooling system further includes:
a pressurized water injection tank (64) configured to inject pressurized water into the pressure vessel (14) during depressurization of the pressure vessel (14);
wherein the injection line (66) is configured to drain water from the RWST (12) into the pressure vessel (14) after the depressurization of the pressure vessel (14).

5. The apparatus of claim 1 wherein the PWR (10) further comprises an integral pressurizer (18) defining a pressurizer volume (19) at the top of the pressure vessel (14), the integral pressurizer (18) including pressure control elements operable to control pressure in the pressurizer volume (19).

6. The apparatus of claim 5 wherein the pressure vessel (14) includes passive integral isolation valves on vessel penetrations located below the integral pressurizer (18) whereby any vessel penetration break that results in depressurization of the pressure vessel (14) occurs at a vessel penetration to into the integral pressurizer (18) at the top of the pressure vessel (14).

7. The apparatus of claim 1 wherein the barrier (70) further comprises:
openings (110) in a lower portion of the central riser (36) arranged to shunt a portion of the upward flow in the central riser (36) into a lower portion of the downcomer annulus(38).

8. An apparatus comprising:
a pressurized water reactor (PWR) (10) comprising a pressure vessel (14) containing a nuclear reactor core (20) comprising fissile material;
a radiological containment structure (52) inside of which the PWR (10) is disposed;
an emergency core cooling system configured to respond to a vessel penetration break at the top of the pressure vessel (14) that results in depressurization of the pressure vessel (14) by draining water from a body of water through an injection line into the pressure vessel (14); and
a barrier (70) configured to operate concurrently with the emergency core cooling system to suppress flow of liquid water from the pressure vessel (14) out the vessel penetration break at the top of the pressure vessel (14), wherein the PWR (10) further comprises a central riser (36) disposed inside the pressure vessel (14) and defining a coolant circulation path in which coolant water heated by the nuclear reactor core (20) flows upward inside the central riser (36), exits a top opening of the central riser (36), and flows downward in a downcomer annulus (38) defined between the central riser (36) and the pressure vessel (14) to return to the nuclear reactor core (20), and the barrier (70) comprises:
openings (110) in a lower portion of the central riser (36) arranged to shunt a portion of the upward flow in the central riser (36) into a lower portion of the downcomer annulus (38).

9. The apparatus of claim 9 wherein the PWR (10) further comprises:
an integral pressurizer (18) defining a pressurizer volume (19) at the top of the pressure vessel (14), the integral pressurizer (18) including pressure control elements operable to control pressure in the pressurizer volume (19); and
passive integral isolation valves on vessel penetrations located below the integral pressurizer (18) whereby any vessel penetration break that results in depressurization of the pressure vessel (14) occurs at a vessel penetration to into the integral pressurizer (18) at the top of the pressure vessel (14).

10. A method comprising:
operating a pressurized water reactor (PWR) (10) comprising a pressure vessel (14) containing a nuclear reactor core (20) comprising fissile material; and
responding to a vessel penetration break at the top of the pressure vessel (14) that results in depressurization of the pressure vessel (14) by operations including:
draining water from a body of water through an injection line (66) into the pressure vessel (14), and
during the draining, suppressing flow of liquid water from the pressure vessel (14) out the vessel penetration break, wherein the operation of suppressing flow of liquid water from the pressure vessel (14) out the vessel penetration break comprises:
during the draining, generating a counterflow in the pressure vessel (14) in a direction opposite a flow of coolant water in the pressure vessel (14) during the operating.

11. A method comprising:
operating a pressurized water reactor (PWR) (10) comprising a pressure vessel (14) containing a nuclear reactor core (20) comprising fissile material; and
responding to a vessel penetration break at the top of the pressure vessel (14) that results in depressurization of the pressure vessel (14) by operations including:
draining water from a body of water through an injection line (66) into the pressure vessel (14), and
during the draining, suppressing flow of liquid water from the pressure vessel (14) out the vessel penetration break, wherein the PWR (10) further comprises a central riser (36) disposed inside the pressure vessel (14), the operating comprises circulating coolant water upward inside the central riser (36) and downward in a downcomer annulus (38) defined between the central riser (36) and the pressure vessel (14), and the operation of suppressing flow of liquid water from the pressure vessel (14) out the vessel penetration break comprises:
injecting the water from the body of water into the central riser (36).

12. The method of claim 11 wherein the injecting comprises injecting the water from the body of water generally downward into the central riser (36).

13. The method of claim 11 wherein the operation of suppressing flow of liquid water from the pressure vessel (14) out the vessel penetration break further comprises:
shunting a portion of the upward flow of coolant water in the central riser (36) through holes (110) in the central riser (36) and into a lower portion of the downcomer annulus (38) without the shunted water reaching a top of the central riser (36).

14. A method comprising:
operating a pressurized water reactor (PWR) (10) comprising a pressure vessel (14) containing a nuclear reactor core (20) comprising fissile material; and
responding to a vessel penetration break at the top of the pressure vessel (14) that results in depressurization of the pressure vessel (14) by operations including:
draining water from a body of water through an injection line (66) into the pressure vessel (14), and
during the draining, suppressing flow of liquid water from the pressure vessel (14) out the vessel penetration break, wherein the PWR (10) further comprises a central riser (36) disposed inside the pressure vessel (14), the operating comprises circulating coolant water upward inside the central riser (36) and downward in a downcomer annulus (38) defined between the central riser (36) and the pressure vessel (14), and the operation of suppressing flow of liquid water from the pressure vessel (14) out the vessel penetration break comprises:
shunting a portion of the upward flow of coolant water in the central riser (36) through holes (110) in the central riser (36) and into a lower portion of the downcomer annulus (38) without the shunted water reaching a top of the central riser (36).

## Patentansprüche

1. Vorrichtung mit:
einem Druckwasserreaktor (DWR) (10) mit einem Druckbehälter (14), der einen Kernreaktorkern (20) mit spaltbarem Material beinhaltet;
einer Strahlenschutzbehälterstruktur (50), innerhalb der der DWR (10) bereitgestellt ist;
einem Notkernkühlsystem, das konfiguriert ist, auf einen Behälterdurchbruchsschaden (14) an dem oberen Ende des Druckbehälters (14), der einen Druckabfall in dem Druckbehälter (14) zur Folge hat, zu reagieren, indem Wasser aus einer Wassermasse durch eine Einspritzleitung (66) in den Druckbehälter (14) abgelassen wird; und
einer Sperre (70), die konfiguriert ist, gleichzeitig mit dem Notfall-Kernkühlsystem tätig zu sein, um einen Strom von flüssigem Wasser aus dem Druckbehälter (14) durch den Behälterdurchbruchsschaden an dem oberen Ende des Druckbehälters (14) zu unterbinden, wobei der DWR (10) ferner eine Mittelsteigleitung (36) aufweist, die innerhalb des Druckbehälters (14) bereitgestellt ist und einen Kühlmittelkreislaufpfad bestimmt, in dem Kühlwasser, das durch den Kernreaktorkern (20) erwärmt wird, innerhalb der Mittelsteigleitung (36) aufwärts strömt, aus einer Öffnung an dem oberen Ende der Mittelsteigleitung austritt, und in einer Abwärtsringkammer (38) abwärts strömt, die zwischen der Mittelsteigleitung (36) und dem Druckbehälter (14) bestimmt ist, um zu dem Kernreaktorkern (20) zurückzukehren, und wobei die Sperre (70):
eine Verlängerung (100) der Einspritzleitung (66) aufweist, die innerhalb des Druckbehälters (14) bereitgestellt ist und durch die Mittelsteigleitung (36) hindurchgeht, um Wasser aus der Wassermasse in die Mittelsteigleitung (36) des Druckbehälters (14) abzulassen.

2. Vorrichtung nach Anspruch 1, wobei die Verlängerung (100) der Einspritzleitung (66) einen abwärts ausgerichteten Auslasshahn (102) hat, der innerhalb der Mittelsteigleitung (36) bereitgestellt ist.

3. Vorrichtung nach Anspruch 1, wobei die Wassermasse einen Betankungs-Wasserspeichertank (BWST) (12) aufweist, der mit dem DWR (10) in dem Strahlenschutzbehälter bereitgestellt ist.

4. Vorrichtung nach Anspruch 5, wobei das Notkernkühlsystem ferner einen druckbeaufschlagten Wassereinspritztank (64) hat, der konfiguriert ist, mit Druck beaufschlagtes Wasser während des Druckabfalls in dem Druckbehälter (14) in den Druckbehälter (14) einzuspritzen;
wobei die Einspritzleitung (66) konfiguriert ist, Wasser aus dem BWST (12) nach dem Druckabfall in dem Druckbehälter (14) in den Druckbehälter (14) abzulassen.

5. Vorrichtung nach Anspruch 1, wobei der DWR (10) ferner einen integralen Druckverstärker (18) aufweist, der ein Druckverstärkervolumen (19) an dem oberen Ende des Druckbehälters (14) bestimmt, wobei der integrale Druckverstärker (18) Drucksteuerelemente hat, die betätigbar sind, um einen Druck in dem Druckverstärkervolumen (19) zu steuern.

6. Vorrichtung nach Anspruch 5, wobei der Druckbehälter (14) passive integrale Isolationsventile auf Behälterdurchdringungen hat, die sich unterhalb des integralen Druckverstärkers (18) befinden, wodurch jeder Behälterdurchbruchsschaden, der einen Druckabfall in dem Druckbehälter (14) zur Folge hat, an einer Behälterdurchdringung in den integralen Druckverstärker (18) an dem oberen Ende des Druckbehälters (14) stattfindet.

7. Behälter nach Anspruch 1, wobei die Sperre (70) ferner
Öffnungen (110) in einem unteren Teil der Mittelsteigleitung (36) aufweist, die angeordnet sind, einen Teil des Aufwärtsstroms in der Mittelsteigleitung (36) in einen unteren Teil der Abwärtsringkammer (38) abzuleiten.

8. Vorrichtung mit:
einem Druckwasserreaktor (DWR) (10) mit einem Druckbehälter (14), der einen Kernreaktorkern (20) mit spaltbarem Material beinhaltet;
einer Strahlenschutzbehälterstruktur (50), innerhalb der der DWR (10) bereitgestellt ist;
einem Notkernkühlsystem, das konfiguriert ist, auf einen Behälterdurchbruchsschaden (14) an dem oberen Ende des Druckbehälters (14), der einen Druckabfall in dem Druckbehälter (14) zur Folge hat, zu reagieren, indem Wasser aus einer Wassermasse durch eine Einspritzleitung (66) in den Druckbehälter (14) abgelassen wird; und
einer Sperre (70), die konfiguriert ist, gleichzeitig mit dem Notkernkühlsystem tätig zu sein, um einen Strom von flüssigem Wasser aus dem Druckbehälter (14) durch den Behälterdurchbruchsschaden an dem oberen Ende des Druckbehälters (14) zu unterbinden, wobei der DWR (10) ferner eine Mittelsteigleitung (36) aufweist, die innerhalb des Druckbehälters (14) bereitgestellt ist und einen Kühlmittelkreislaufpfad bestimmt, in dem Kühlwasser, das durch den Kernreaktorkern (20) erwärmt wird, innerhalb der Mittelsteigleitung (36) aufwärts strömt, aus einer Öffnung an dem oberen Ende der Mittelsteigleitung austritt, und in einer Abwärtsringkammer (38) abwärts strömt, die zwischen der Mittelsteigleitung (36) und dem Druckbehälter (14) bestimmt ist, um zu dem Kernreaktorkern (20) zurückzukehren, und wobei die Sperre (70):
Öffnungen (110) in einem unteren Teil der Mittelsteigleitung (36) aufweist, die angeordnet sind, einen Teil des Aufwärtsstroms in der Mittelsteigleitung (36) in einen unteren Teil der Abwärtsringkammer (38) abzuleiten.

9. Vorrichtung nach Anspruch 9, wobei der DWR (10) ferner:
einen integralen Druckverstärker (18), der ein Druckverstärkervolumen (19) an dem oberen Ende des Druckbehälters (14) bestimmt, wobei der integrale Druckverstärker (18) Drucksteuerelemente hat, die betätigbar sind, um einen Druck in dem Druckverstärkervolumen (19) zu steuern; und
passive integrale Isolationsventile auf Behälterdurchdringungen hat, die sich unterhalb des integralen Druckverstärkers (18) befinden, wodurch jeder Behälterdurchbruchsschaden, der einen Druckabfall in dem Druckbehälter (14) zur Folge hat, an einer Behälterdurchdringung in den integralen Druckverstärker (18) an dem oberen Ende des Druckbehälters (14) stattfindet.

10. Verfahren mit:
Betreiben eines Druckwasserreaktors (DWR) (10) mit einem Druckbehälter (14), der einen Kernreaktorkern (20) mit spaltbarem Material beinhaltet; und
Reagieren auf einen Behälterdurchbruchsschaden an dem oberen Ende des Druckbehälters (14), der einen Druckabfall in dem Druckbehälter (14) zur Folge hat, durch einschließlich folgende Vorgänge:
Ablassen von Wasser aus einer Wassermasse durch eine Einspritzleitung (66) in den Druckbehälter (14), und
Unterbinden eines Stroms von flüssigem Wasser aus dem Druckbehälter (14) durch den Behälterdurchbruchsschaden während des Ablassens, wobei der Vorgang des Unterbindens eines Stroms von flüssigem Wasser aus dem Druckbehälter (14) durch den Behälterdurchbruchsschaden :
ein Erzeugen eines Gegenstroms in dem Druckbehälter (14) während des Ablassens umfasst, in einer Richtung, die einem Strom von Kühlwasser in dem Druckbehälter (14) während des Betriebs entgegengesetzt ist.

11. Verfahren mit:
Betreiben eines Druckwasserreaktors (DWR) (10) mit einem Druckbehälter (14), der einen Kernreaktorkern (20) mit spaltbarem Material beinhaltet; und
Reagieren auf einen Behälterdurchbruchsschaden an dem oberen Ende des Druckbehälters (14), der einen Druckabfall in dem Druckbehälter (14) zur Folge hat, durch einschließlich folgende Vorgänge:
Ablassen von Wasser aus einer Wassermasse durch eine Einspritzleitung (66) in den Druckbehälter (14), und
Unterbinden eines Stroms von flüssigem Wasser aus dem Druckbehälter (14) durch den Behälterdurchbruchsschaden während des Ablassens, wobei der DWR (10) ferner eine Mittelsteigleitung (36) aufweist, die innerhalb des Druckbehälters (14) bereitgestellt ist, der Betrieb ein Zirkulieren von Kühlwasser aufwärts innerhalb der Mittelsteigleitung (36) und abwärts in einer Abwärtsringkammer (38) umfasst, die zwischen der Mittelsteigleitung (36) und dem Druckbehälter (14) bestimmt ist, und der Vorgang des Unterbindens eines Stroms von flüssigem Wasser aus dem Druckbehälter (14) durch den Behälterdurchbruchsschaden:
ein Einspritzen des Wassers aus der Wassermasse in die Mittelsteigleitung (36) umfasst.

12. Verfahren nach Anspruch 11, wobei das Einspritzen ein Einspritzen des Wassers aus der Wassermasse hauptsächlich abwärts in die Mittelsteigleitung (36) umfasst.

13. Verfahren nach Anspruch 11, wobei der Vorgang des Unterbindens eines Stroms von flüssigem Wasser aus dem Druckbehälter (14) durch den Behälterdurchbruchsschaden ferner:
ein Ableiten eines Teils des Aufwärtsstromes von Kühlwasser in der Mittelsteigleitung (36) durch Öffnungen (110) in der Mittelsteigleitung (36) in einen unteren Teil der Abwärtsringkammer (38) umfasst, ohne dass das abgeleitete Wasser ein oberes Ende der Mittelsteigleitung (36) erreicht.

14. Verfahren mit:
Betreiben eines Druckwasserreaktors (DWR) (10) mit einem Druckbehälter (14), der einen Kernreaktorkern (20) mit spaltbarem Material beinhaltet; und
Reagieren auf einen Behälterdurchbruchsschaden an dem oberen Ende des Druckbehälters (14), der einen Druckabfall in dem Druckbehälter (14) zur Folge hat, durch einschließlich folgende Vorgänge:
Ablassen von Wasser aus einer Wassermasse durch eine Einspritzleitung (66) in den Druckbehälter (14), und
Unterbinden eines Stroms von flüssigem Wasser aus dem Druckbehälter (14) durch den Behälterdurchbruchsschaden während des Ablassens, wobei der DWR (10) ferner eine Mittelsteigleitung (36) aufweist, die innerhalb des Druckbehälters (14) bereitgestellt ist, der Betrieb ein Zirkulieren von Kühlwasser aufwärts innerhalb der Mittelsteigleitung (36) und abwärts in einer Abwärtsringkammer (38) umfasst, die zwischen der Mittelsteigleitung (36) und dem Druckbehälter (14) bestimmt ist, und der Vorgang des Unterbindens eines Stroms von flüssigem Wasser aus dem Druckbehälter (14) durch den Behälterdurchbruchsschaden:
ein Ableiten eines Teils des Aufwärtsstromes von Kühlwasser in der Mittelsteigleitung (36) durch Öffnungen (110) in der Mittelsteigleitung (36) in einen unteren Teil der Abwärtsringkammer (38) umfasst, ohne dass das abgeleitete Wasser ein oberes Ende der Mittelsteigleitung (36) erreicht.

## Revendications

1. Appareil comprenant :
un réacteur à eau pressurisée (REP) (10) comprenant un récipient sous pression (14) contenant un coeur de réacteur nucléaire (20) comprenant de la matière fissile ;
une structure de confinement radiologique (50) à l'intérieur de laquelle le REP (10) est disposé ;
un système de refroidissement d'urgence du coeur configuré pour réagir à une fissuration de pénétration du récipient (14) au-dessus du récipient sous pression (14), permettant de dépressuriser le récipient sous pression (14) en évacuant l'eau d'une masse d'eau par une conduite d'injection (66) dans le récipient sous pression (14) ; et
une barrière (70) configurée pour fonctionner simultanément avec le système de refroidissement d'urgence du coeur pour couper le débit d'eau liquide du récipient sous pression (14) par le point de fissuration de pénétration du récipient, au-dessus du récipient sous pression (14), dans laquelle le REP (10) comprend, en outre, une colonne montante centrale (36) disposée à l'intérieur du récipient sous pression (14) et définissant une trajectoire de circulation de liquide de refroidissement sur laquelle l'eau de refroidissement chauffée par le coeur du réacteur nucléaire (20) s'écoule vers le haut à l'intérieur de la colonne montante centrale (36), sort par une ouverture supérieure de la colonne montante centrale, et s'écoule vers le bas dans un anneau d'écoulement (38) défini entre la colonne montante centrale (36) et le récipient sous pression (14) pour retourner vers le coeur du réacteur nucléaire (20), et la barrière (70) comprend :
une extension (100) de la conduite d'injection (66) disposée à l'intérieur du récipient sous pression (14) et passant à travers la colonne montante centrale (36) pour évacuer l'eau de la masse d'eau dans la colonne montante centrale (36) du récipient sous pression (14).

2. Appareil de la revendication 1, dans lequel l'extension (100) de la conduite d'injection (66) inclut un embout d'écoulement (102) orienté vers le bas, disposé à l'intérieur de la colonne montante centrale (36).

3. Appareil de la revendication 1, dans lequel la masse d'eau comprend un réservoir de stockage d'eau de ravitaillement (RSER) (12) disposé avec le REP (10) dans le confinement radiologique.

4. Appareil de la revendication 5, dans lequel le système de refroidissement d'urgence du coeur inclut, en outre :
un réservoir d'injection d'eau pressurisée (64) configuré pour injecter de l'eau pressurisée dans le récipient sous pression (14) pendant la dépressurisation du récipient sous pression (14) ;
dans lequel la conduite d'injection (66) est configurée pour évacuer l'eau du RSER (12) dans le récipient sous pression (14) après la dépressurisation du récipient sous pression (14).

5. Appareil de la revendication 1, dans lequel le REP (10) comprend, en outre, un pressuriseur intégral (18) définissant un volume de pressuriseur (19) au-dessus du récipient sous pression (14), le pressuriseur intégral (18) incluant des éléments de contrôle de pression prévus pour contrôler la pression dans le volume de pressuriseur (19).

6. Appareil de la revendication 5, dans lequel le récipient sous pression (14) inclut des vannes d'isolement intégrales passives sur des pénétrations de récipient placées en dessous du pressuriseur intégral (18), de sorte que toute fissuration de pénétrations de récipient entraînant une dépressurisation du récipient sous pression (14) se produise à une pénétration du récipient dans le pressuriseur intégral (18) au-dessus du récipient sous pression (14).

7. Appareil de la revendication 1, dans lequel la barrière (70) comprend en outre :
des ouvertures (110) dans une partie inférieure de la colonne montante centrale (36), conçues pour dériver une partie du débit ascendant dans la colonne montante centrale (36) dans une partie inférieure de l'anneau d'écoulement (38).

8. Appareil comprenant :
un réacteur à eau pressurisée (REP) (10) comprenant un récipient sous pression (14) contenant un coeur de réacteur nucléaire (20) comprenant de la matière fissile ;
une structure de confinement radiologique (52) à l'intérieur de laquelle le REP (10) est disposé ;
un système de refroidissement d'urgence du coeur configuré pour réagir à une fissuration de pénétration du récipient au-dessus du récipient sous pression (14), permettant de dépressuriser le récipient sous pression (14) en évacuant l'eau d'une masse d'eau par une conduite d'injection dans le récipient sous pression (14) ; et
une barrière (70) configurée pour fonctionner simultanément avec le système de refroidissement d'urgence du coeur pour couper le débit d'eau liquide du récipient sous pression (14) par la fissuration de pénétration du récipient, au-dessus du récipient sous pression (14), dans laquelle le REP (10) comprend, en outre, une colonne montante centrale (36) disposée à l'intérieur du récipient sous pression (14) et définissant une trajectoire de circulation de liquide de refroidissement sur laquelle l'eau de refroidissement chauffée par le coeur du réacteur nucléaire (20) s'écoule vers le haut à l'intérieur de la colonne montante centrale (36), sort par une ouverture supérieure de la colonne montante centrale (36), et s'écoule vers le bas dans un anneau d'écoulement (38) défini entre la colonne montante centrale (36) et le récipient sous pression (14) pour retourner vers le coeur du réacteur nucléaire (20), et la barrière (70) comprend :
des ouvertures (110) dans une partie inférieure de la colonne montante centrale (36) conçues pour dériver une partie du débit ascendant dans la colonne montante centrale (36) dans une partie inférieure de l'anneau d'écoulement (38).

9. Appareil de la revendication 9, dans lequel le REP (10) comprend, en outre :
un pressuriseur intégral (18) définissant un volume de pressuriseur (19) au-dessus du récipient sous pression (14), le pressuriseur intégral (18) incluant des éléments de contrôle de pression prévus pour contrôler la pression dans le volume de pressuriseur (19) ; et
des vannes d'isolement intégrales passives sur des pénétrations de récipient placées en dessous du pressuriseur intégral (18), de sorte que toute fissuration de pénétrations de récipient entraînant une dépressurisation du récipient sous pression (14) se produise à une pénétration du récipient dans le pressuriseur intégral (18) au-dessus du récipient sous pression (14).

10. Procédé comprenant :
la mise en fonctionnement d'un réacteur à eau pressurisée (REP) (10) comprenant un récipient sous pression (14) contenant un coeur de réacteur nucléaire (20) comprenant de la matière fissile ; et
la réaction à une fissuration de pénétrations de récipient en haut du récipient sous pression (14) entraînant une dépressurisation du récipient sous pression (14) par des opérations incluant :
l'évacuation de l'eau d'une masse d'eau par une conduite d'injection (66) dans le récipient sous pression (14), et
pendant l'évacuation, la coupure du débit d'eau liquide du récipient sous pression (14) par la fissuration de pénétrations du récipient, dans laquelle l'opération de coupure du débit d'eau liquide du récipient sous pression (14), par la fissuration de pénétrations du récipient comprend :
pendant l'évacuation, la génération d'un contre-courant dans le récipient sous pression (14) dans une direction opposée à un débit d'eau de refroidissement dans le récipient sous pression (14) pendant le fonctionnement.

11. Procédé comprenant :
la mise en fonctionnement d'un réacteur à eau pressurisée (REP) (10) comprenant un récipient sous pression (14) contenant un coeur de réacteur nucléaire (20) comprenant de la matière fissile ; et
la réaction à une fissuration de pénétrations du récipient en haut du récipient sous pression (14) entraînant une dépressurisation du récipient sous pression (14) par des opérations incluant :
l'évacuation de l'eau d'une masse d'eau par une conduite d'injection (66) dans le récipient sous pression (14), et
pendant l'évacuation, la coupure du débit d'eau liquide du récipient sous pression (14) par la fissuration de pénétrations du récipient, dans laquelle le REP (10) comprend, en outre, une colonne montante centrale (36) disposée à l'intérieur du récipient sous pression (14), le fonctionnement comprenant la circulation de l'eau de refroidissement vers le haut, à l'intérieur de la colonne montante centrale (36) et vers le bas, dans un anneau d'écoulement (38) défini entre la colonne montante centrale (36) et le récipient sous pression (14), et l'opération de coupure du débit d'eau liquide du récipient sous pression (14), par la fissuration de pénétrations du récipient, comprend :
l'injection de l'eau de la masse d'eau dans la colonne montante centrale (36).

12. Procédé de la revendication (11) dans lequel l'injection comprend l'injection de l'eau de la masse d'eau généralement vers le bas dans la colonne montante centrale (36).

13. Procédé de la revendication (11) dans lequel l'opération de coupure du débit d'eau liquide du récipient sous pression (14) par la fissuration de pénétration du récipient comprend, en outre :
la dérivation d'une partie du débit ascendant d'eau de refroidissement dans la colonne montante centrale (36) par des trous (110) dans la colonne montante centrale (36) et dans une partie inférieure de l'anneau d'écoulement (38) sans que l'eau dérivée n'atteigne le haut de la colonne montante centrale (36) .

14. Procédé comprenant :
la mise en fonctionnement d'un réacteur à eau pressurisée (REP) (10) comprenant un récipient sous pression (14) contenant un coeur de réacteur nucléaire (20) comprenant de la matière fissile ; et
la réaction à une fissuration de pénétrations du récipient en haut du récipient sous pression (14) entraînant une dépressurisation du récipient sous pression (14) par des opérations incluant :
l'évacuation de l'eau d'une masse d'eau par une conduite d'injection (66) dans le récipient sous pression (14), et
pendant l'évacuation, la coupure du débit d'eau liquide du récipient sous pression (14) par la fissuration de pénétrations du récipient, dans laquelle le REP (10) comprend, en outre, une colonne montante centrale (36) disposée à l'intérieur du récipient sous pression (14), le fonctionnement comprenant la circulation de l'eau de refroidissement vers le haut, à l'intérieur de la colonne montante centrale (36) et vers le bas, dans un anneau d'écoulement (38) défini entre la colonne montante centrale (36) et le récipient sous pression (14), et l'opération de coupure du débit d'eau liquide du récipient sous pression (14), par la fissuration de pénétrations du récipient, comprend :
la dérivation d'une partie du débit ascendant d'eau de refroidissement dans la colonne montante centrale (36) par des trous (110) dans la colonne montante centrale (36) et dans une partie inférieure de l'anneau d'écoulement (38) sans que l'eau dérivée n'atteigne le haut de la colonne montante centrale (36) .
